# EUROPÄISCHE PATENTSCHRIFT

(11) **EP 1 776 710 B1**
(45) Veröffentlichungstag und Bekanntmachung des Hinweises auf die Patenterteilung: **06.02.2008**
(21) Anmeldenummer: 05763427.1
(22) Anmeldetag: 02.08.2005
(51) Int. Cl.: H01H 9/16, H01H 71/04

(54) **SCHUTZSCHALTERANORDNUNG**
SAFETY SWITCH SYSTEM
ENSEMBLE D'INTERRUPTEURS DE PROTECTION

(30) Priorität: 10.08.2004 DE 202004012469 U
(43) Veröffentlichungstag der Anmeldung: 25.04.2007
(73) Patentinhaber: Ellenberger & Poensgen GmbH, D-90518 Altdorf (DE)
(72) Erfinder: NAUMANN, Michael, 90537 Feucht (DE); MIKLIS, Markus, 90592 Pfeifferhütte (DE); MECKLER, Peter, 91224 Pommelsbrunn-Hohenstadt (DE); GROSS, Patric, 90592 Schwarzenbruck-Lindelburg (DE)
(74) Vertreter: Tergau & Pohl Patentanwälte
(86) Internationale Anmeldenummer: PCT/EP2005/008347
(87) Internationale Veröffentlichungsnummer: WO 2006/018129

(56) Entgegenhaltungen:
- EP-A- 1 385 015
- DE-A1- 10 248 640
- US-A- 4 038 585
- US-A- 5 875 087
- US-A1- 2003 132 753
- US-B1- 6 195 243
- US-B1- 6 313 980

## Beschreibung

Die Erfindung bezieht sich auf eine Schutzschalteranordnung mit einer Anzahl von Schutzschaltern, die jeweils über Leitungen mit einer Systemkomponente eines Energieverteilungssystems verbunden sind. Unter Schutzschalter werden hierbei insbesondere Leitungs-Schutzschalter zum Schutz von stromführenden Leitungen eines Niederspannungsnetzes verstanden.

Eine derartige Schutzschalteranordnung ist üblicherweise Bestandteil insbesondere eines Schaltschrankes einer komplexen Anlage oder eines Flugzeugbordnetzes mit in einer Bedienfront in Form beispielsweise eines Bedienpanels gehaltenen Schutzschaltern, deren Bedienknöpfe über entsprechende Durchführungsöffnungen von der Rückseite der Bedienfront her durch diese hindurch und zur Vorder- oder Frontseite hin geführt sind.

Die Bedienknöpfe der Schutzschalter dienen insbesondere zur manuellen Auslösung des jeweiligen Schutzschalters, um den entsprechenden oder betroffenen Leitungspfad und die mit diesem verbundene Systemkomponente des Energieverteilungssystems strom- oder spannungsfrei zu schalten. Zudem zeigt der Bedienknopf in der Regel durch dessen jeweilige Stellung oder Stellungsänderung einen im Fehlerfall infolge einer Überlast der zu schützenden Leitungen des betroffenen Leitungspfades ausgelösten Schutzschalter an.

US-B1-6 195 243 offenbart eine Schutzschalteranordnung gemäß Oberbegriff des Anspruchs 1.

Der Erfindung liegt die Aufgabe zugrunde, eine Schutzschalteranordnung der eingangs genannten Art derart weiterzubilden, dass zusätzlich zur reinen Bedienfunktion auch Diagnose- und/oder Parametrierfunktionen ermöglicht sind.

Diese Aufgabe wird erfindungsgemäß gelöst durch die Merkmale des Anspruches 1. Dazu ist dem oder jedem Schutzschalter ein ebenfalls von der Frontseite der Bedienfront aus zugängliches Koppelelement zum Austausch von Diagnose- und/oder Parametrierdaten zugeordnet.

Die Erfindung geht dabei von der Überlegung aus, dass einerseits die Schutzschalter einer derartigen Schutzschalteranordnung zunehmend mit lokaler Intelligenz in Form insbesondere einer beispielsweise prozessorgestützten Verarbeitungseinheit ausgerüstet sind und daher zusätzlich zur eigentlichen Schutzfunktion auch Überwachungs- und Steuerungsaufgaben übernehmen können. Andererseits sollte eine Zugangsmöglichkeit für die sich daraus ergebenden Diagnose- und/oder Parametrierfunktionen auch bei bereits eingebauten Schutzschaltern unter Vermeidung der Nachrüstung eines für solche Zwecke üblicherweise komplexen Datenbussystems ermöglicht sein. Dies kann dadurch erreicht werden, dass eine Diagnose bzw. Parametrierung der Schutzschalter und/oder der mit diesen gekoppelten Systemkomponenten des Energieverteilungssystems von der Bedienseite aus ermöglicht wird. Dadurch ist ein Ausbau der Geräte für derartige Diagnose- bzw. Parametrierzwecke ebenso wenig erforderlich wie ein Datenbussystem.

In vorteilhafter Ausgestaltung ist das von der Frontseite der Bedienfront her zugängliche Koppelelement zum Datenaustausch für Diagnose- bzw. Parametrierzwecke für einen bidirektionalen Datenaustausch ausgebildet. Dabei kann das Koppelelement als Sende- und/oder Empfangseinrichtung zum drahtlosen Datenaustausch ausgebildet sein. Hier ist grundsätzlich eine optische Datenübertragung, beispielsweise mittels Infrarot, oder auch eine akustische Datenübertragung, beispielsweise mittels Ultraschall, denkbar. Auch ist eine Datenübertragung per Funk einsetzbar. Grundsätzlich kann das Koppelelement auch für einen kabel-, leitungs-, oder drahtgebundenen Datenaustausch, zweckmäßigerweise in Form einer elektrischen Anschluß- oder Steckverbindung, ausgebildet sein.

Hinsichtlich der geometrischen Anordnung kann das Koppelelement in der Bedienfront, vorzugsweise in unmittelbarer Nähe des jeweiligen Bedienknopfes des zugehörigen Schutzschalters, oder vorzugsweise im Bedienknopf selbst vorgesehen sein. Unter Bedienknopf wird dabei auch ein Bedienelement in Form eines Schaltknopf, einer Schaltwippe oder dergleichen verstanden.

Die schalterinterne Ankopplung oder Verbindung des Koppelelementes kann über eine im jeweiligen Schutzschalter vorgesehene Verarbeitungseinheit zum Messen und/oder Steuern von schalterrelevanten Daten bzw. Schaltelementen vorgesehen sein.

Um bei Anschluss eines Diagnose- bzw. Parametriergerätes über das in der Bedienfront vorgesehene Koppelelement eine aus dem Energieverteilungssystem herrührende Überspannung am Diagnosegerät zu verhindern, ist zweckmäßigerweise in die schalterinterne Verbindung des Koppelelementes mit dem Leitungsanschluss ein Hilfsschaltelement geschaltet. Dabei wirkt das Hilfsschaltelement (Hilfsschalter) derart mit einem Hauptschaltelement (Hauptschalter) des Schutzschalters zusammen, dass nur bei geöffnetem Hauptschalter und - infolge der Kopplung - geschlossenem Hilfsschalter ein Datenaustausch mit der jeweiligen Systemkomponente des Energieverteilungssystems erfolgen kann.

Die mit der Erfindung erzielten Vorteile bestehen insbesondere darin, dass durch die Anordnung eines von der Frontseite einer Bedienfront einer Schutzschalteranordnung zugänglichen Koppelelementes ein Datenaustausch mit schalterinternen Komponenten einerseits und mit an den jeweiligen Schutzschalter angeschlossenen Systemkomponenten eines Energieverteilungssystems andererseits busfrei ermöglicht ist. Der Datenaustausch erfolgt zweckmäßigerweise über ein Diagnose- bzw. Parametriergerät, das über eine entsprechende Koppel- oder Schnittstelle verfügt, um ebenfalls von der Frontseite der Bedienfront her Diagnose- und/oder Parametrierdaten ein- bzw. auszulesen. So können über einen solchen busfreien Datenaustausch über die entsprechenden Koppelelemente gegebenenfalls im Schutzschalter zwischengespeicherte Mess- und Fehlerdaten ausgelesen und Parametrierdaten zur Konfiguration des die jeweiligen Leitungen des Energieverteilungssystems überwachenden Schutzschalter, wie beispielsweise spezifische Leitungs- oder Systemdaten, in den Schutzschalter bzw. über diesen in die jeweilige Systemkomponente des Energieverteilungssystems eingelesen werden.

Nachfolgend werden Ausführungsbeispiele der Erfindung anhand einer Zeichnung näher erläutert. Darin zeigen:
- Fig. 1: schematisch eine Schutzschalteranordnung eines Energieverteilungssystems mit in einer Bedienfront angeordneten Bedien- und Koppelelementen sowie einem Diagnosegerät zum Datenaustausch,
- Fig. 2: eine Ausführungsvariante mit in der Bedienfront angeordnetem und mit dem entsprechenden Schutzschalter unmittelbar gekoppeltem Koppelelement, und
- Fig. 3: in einer Darstellung gemäß Fig. 2 eine Ausführungsform mit im Bedienelement des Schutzschalters angeordnetem Koppelelement.

Einander entsprechende Teile sind in allen Figuren mit den gleichen Bezugszeichen versehen.

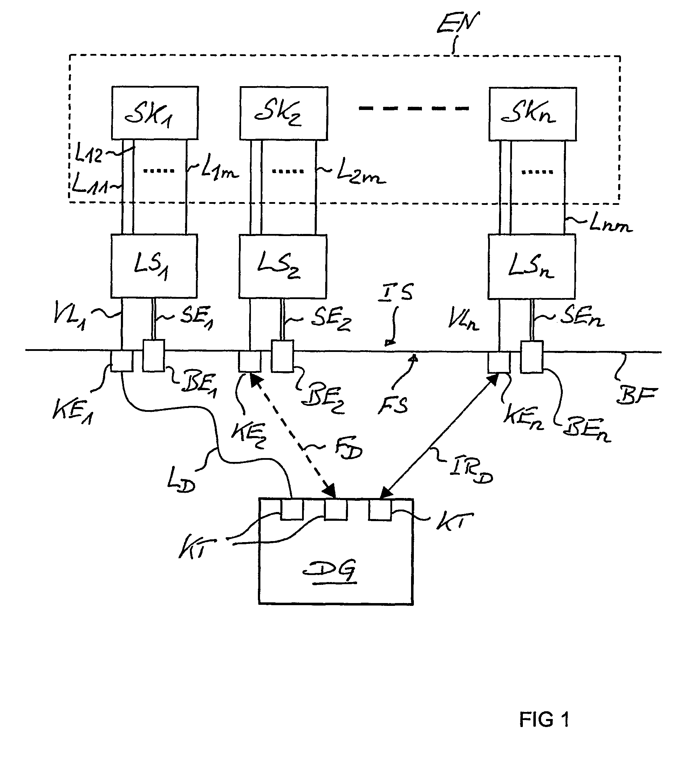

Fig. 1 zeigt schematisch eine Schutzschalteranordnung mit einer Anzahl von Leitungs-Schutzschaltern LS_{1....n}, die über Leitungen L_{11...} L₁ₘ mit jeweils einer Systemkomponente SK_{1...n} eines Energieverteilungssystems oder Bordnetzes EN verbunden sind.

Jedem nachfolgend als Schutzschalter bezeichneten Leitungs-Schutzschalter LS_{1...n} ist ein nachfolgend als Bedienknopf bezeichnetes Bedienelement BE_{1....n} zugeordnet. Der jeweilige Bedienknopf BEₙ, der auch als Schaltknopf oder als Schaltwippe ausgeführt sein kann, ist mit dem jeweiligen Schutzschalter LSₙ mechanisch über ein entsprechendes Schaltelement SEₙ gekoppelt. Der Bedienknopf BEₙ des jeweiligen Schutzschalters LSₙ ist in einer Bedienfront BF angeordnet und dort in nicht näher dargestellter Art und Weise über Durchgangsöffnungen von einer Gehäuse- oder Geräteinnenseite IS, beispielsweise dem Innenraum eines Schalt- oder Bordnetzschrankes, nach außen zu einer Außenseite hin geführt und somit von der Frontseite FS der Bedienfront BF aus zugänglich und betätigbar.

Bei dem Ausführungsbeispiel nach Fig. 1 ist räumlich neben dem oder jedem Bedienknopf BE_{1...n} ein Koppelelement KE_{1...n} vorgesehen, das ebenfalls von der Frontseite FS der Bedienfront BF aus zugänglich ist. Das jeweilige Koppelelement KEₙ ist geräteintern, d.h. auf der der Frontseite FS gegenüberliegenden Innenseite IS der Bedienfront BF mit dem jeweiligen Schutzschalter LSₙ beispielsweise über eine Verbindungsleitung VLₙ verbunden.

Das Koppelelement KEₙ dient zum Datenaustausch mit einem schematisch dargestellten Diagnosegerät DG. Dieses weist eine mit dem jeweiligen Koppelelement KEₙ komplementäres Koppelteil KT auf, wobei - wie symbolisch dargestellt - zum Datenaustausch eine kabel- oder leitungsgebundene elektrische Verbindung L_{D} oder auch eine drahtlose Verbindung IR_{D}, F_{D} über entsprechend ausgebildete Koppelelemente KEₙ bzw. Kopptelteile KT realisierbar ist. So kann ein optischer Datenaustausch über eine Infraraot-Strecke IR_{D} mit beispielsweise als Infrarot-Sender und -Empfänger ausgebildetem Koppelelemnte KEₙ oder auch ein Datenaustausch per Funk über eine Funkstrecke F_{D} erfolgen. Hierzu sind dann die Koppelelemente KEₙ als entsprechende Sende- und Empfangseinrichtung ausgeführt.

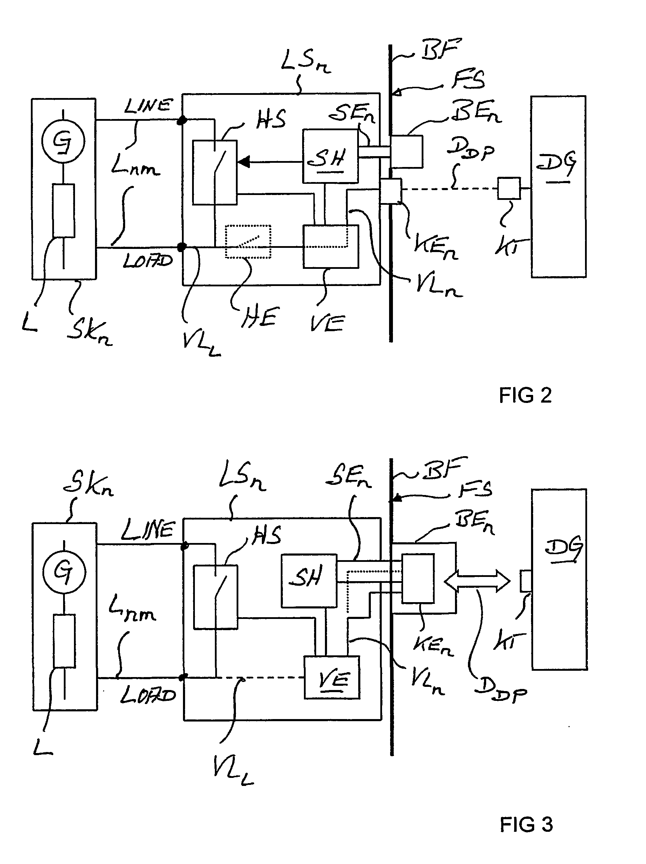

Die Fig. 2 und 3 zeigen den grundsätzlichen Aufbau eines Schutzschalters LSₙ mit einem mechanischen, elektromechanischen oder elektronischen Schaltschloss SH und mit einem mit diesem gekoppelten Hauptschaltelement oder Hauptschalter HS in Form mechanischer Schaltkontakte oder eines elektronischen bzw. Halbleiterschalters, beispielsweise in Form eines Feldeffekttransistors. Weiterer Bestandteil des Schutzschalters LSₙ ist zweckmäßigerweise eine Verarbeitungseinheit VE. Diese dient einerseits zum Steuern des Schaltschlosses SH und/oder des Hauptschalters HS sowie andererseits zur Aufnahme, Speicherung und Verarbeitung von schutzschalterintern erfassten Messwerten.

Der Hauptschalter HS ist über die zu überwachenden Leitungen Lₙₘ mit der jeweiligen Systemkomponente SKₙ verbunden, die durch einen Generator G und eine Last L symbolisiert ist. Üblicherweise wird dabei der der Versorgung der Systemkomponente SKₙ zugewandte Ausgang des Schutzschalters LSₙ als LINE-Anschluss bezeichnet, während der dem Verbraucher oder der Last L der Systemkomponeten SKₙ zugewandte Anschluss des Schutzschalters LSₙ als LOAD bezeichnet wird.

Gestrichelt dargestellt ist in Fig. 2 auch ein schalterintern vorgesehenes Hilfsschaltelement HE, das in eine schalterinterne Verbindungsleitung VL_{L} zum LOAD-Anschluss des Schutzschalters LSₙ geschaltet ist. Die Verbindungsleitung VL_{L} ist über die Verarbeitungseinheit oder -logik VE des Schutzschalters LSₙ an das in der Bedienfront oder Frontplatte BF vorgesehene Koppelelement KEₙ geführt. Auch kann - wie gestrichelt dargestellt - eine direkte Verbindung vom Koppelelement KEₙ über das Hilfsschaltelement HE zum LOAD-Anschluss des Schutzschalters LSₙ vorgesehen sein. Das nachfolgend auch als Hilfsschalter bezeichnete Hilfsschaltelement HE und der Hauptschalter HS sind dabei, insbesondere über die Verarbeitungseinheit VE oder über einen separaten frontseitigen Zusatzkontakt, derart miteinander gekoppelt, dass der Hilfsschalter HE nur dann geschlossen ist, wenn der Hauptschalter HS geöffnet ist. Durch ist eine Überspannung am Koppelelement KEₙ und über dieses am Diagnosegerät DG zuverlässig vermieden.

Bei dem Ausführungsbeispiel nach Fig. 2 ist das Koppelelement KEₙ direkt mit dem Schutzschalter LSₙ gekoppelt. Hierzu kann in nicht näher dargestellter Art und Weise eine unmittelbare Anschlusskontaktierung zwischen dem Koppelelement und dem Schutzschalter LSₙ, insbesondere über dessen Schaltergehäuse, bestehen.

Ein Datenaustausch zwischen dem Schutzschalter LSₙ und gegebenenfalls über diesen mit der jeweiligen Systemkomponente SKₙ sowie über das Koppelelement KEₙ erfolgt mit dem Diagnose- und/oder Parametriergerät DG, das ebenfalls von der Frontseite FS der Bedienfront BF her handhabbar ist. Der Datenaustausch kann dabei - wie in Fig. 3 durch den Doppelpfeil symbolisiert - optisch, akustisch oder per Funk und damit drahtlos oder - wie in Fig. 2 durch die strichlinierte Verbindung symbolisiert - kabel- oder leitungsgebunden erfolgen. Dazu weist das Diagnosegerät die entsprechende Koppel- oder Schnittstelle KT für einen solchen drahtlosen bzw. drahtgebundenen Datenaustausch auf.

Bei der insbesondere bei beengten Raum- oder Platzverhältnissen mit entsprechend kleinflächiger Bedienfront BF bevorzugten Ausführungsform nach Fig. 3 ist das Koppelelement KEₙ in den Bedienknopf BE integriert. Die schalterinterne Leitungsverbindung VLₙ kann dabei - wie strichliniert dargestellt - auch über das mechanische Schaltelement SEₙ in der Verbindung des Bedienknopfes BE mit dem Schaltschloss SH erfolgen. Bei dieser Ausführungsform ist ein Hilfsschaltelement HE nicht gezeigt, wobei der schalterinterne Aufbau mit und ohne Hilfsschaltelement oder Hilfsschalter HE sowie mit oder ohne Verarbeitungseinheit VE sowohl bei der Ausführungsform mit separater Durchgangsöffnung für das Koppelelement KEₙ durch die Bedienfront BF als auch bei der Ausführungsform mit in den Bedienknopf BE integriertem Koppelelement KEₙ vorgesehen sein kann.

Der Datenaustausch über das jeweilige Koppelelement KEₙ erfolgt vorzugsweise bidirektional. Hierzu können Steuerdaten und Parameter oder Parametrierdaten D_{DP} vom Diagnosegerät DG über das jeweilige Koppelelement KEₙ in die Verarbeitungseinheit VE des jeweiligen Schutzschalters LSₙ und/oder hierüber zur jeweiligen Systemkomponente SKₙ übertragen werden. Die Steuer-, Diagnose- bzw. Parametrierdaten D_{DP} können dabei in der Verarbeitungseinheit VE hinterlegt oder zwischengespeichert werden und/oder von dort zur Systemkomponente SKₙ weitergeführt sowie vom Diagnosegerät DG auch wieder ausgelesen werden. Auch können Leitungsparameter in der Verarbeitungseinheit VE zwischengespeichert werden. Eine Speicherung von Messwerten und Diagnosedaten, insbesondere auch aus dem System bzw. der Systemkomponente SKₙ, wie beispielsweise Koppelimpedanzen und systemspezifische Parameter, können ebenfalls in der Verarbeitungseinheit VE zwischengespeichert und - mittels des Diagnosegeraätes DG - ausgelesen werden.

Zudem können Daten oder Parameter aus der Systemkomponeten SKₙ ausgelesen und damit Systemzustände mittels des Diagnosegeräte DG über das Koppelelement KEₙ abgefragt werden. Auch hier können wiederum systemspezifische Daten, Fehlermeldungen und/oder Messwerte in der Verarbeitungseinheit VE des Schutzschalters LSₙ zwischengespeichert und zu gegebener Zeit über das Koppelement KEₙ mittels des Diagnosegerätes DG ausgelesen werden.

Somit erfolgt das Ein- und Auslegen von Diagnose- und/oder Parameterdaten D_{DP} busfrei über das Koppelelement KEₙ des jeweiligen Schutzschalters LSₙ von der Bedien- oder Frontseite FS her, ohne dass hierzu ein Eingriff in die Einbauseite der Schutzschalter LSₙ, d. h. auf der der Frontseite FS gegenüberliegende Geräte- oder Gehäuseinnenseite IS erforderlich ist.

### Bezugszeichenliste

- BEₙ: Bedienknopf
- BF: Bedienfront
- DG: Diagnosegerät
- D_{DP}: Diagnose-/Parametrierdaten
- EN: Energieverteilungssystem / Bordnetz
- F_{D}: Funkverbindung
- FS: Frontseite
- G: Generator
- HE: Hilfsschaltelement./.Hilfsschalter
- HS: Hauptschaltelement / Hauptschalter
- IR_{D}: Infrarot-Strecke
- IS: Geräte- / Gehäuseinnenseite
- KEₙ: Koppelelement
- KT: Koppelteil / Schnittstelle
- L: Last
- L_{D}: Verbindung
- Lₙₘ: Leitung
- LSₙ: Leitungs-Schutzschalter
- SEₙ: Schaltelement
- SH: Schaltschloß
- SKₙ: Systemkomponente
- VE: Verarbeitungseinheit
- VLₙ: Verbindungsleitung

## Patentansprüche

1. Schutzschalteranordnung mit einer Anzahl von Schutzschaltern (LSₙ), die jeweils über Leitungen (Lₙₘ) mit einer Systemkomponente (SKₙ) eines Energieverteilungssystems (EN) verbunden sind und einen Bedienknopf (BEₙ) aufweisen,
- wobei der Bedienknopf (BEₙ) zum Auslösen des jeweiligen Schutzschalters (LSₙ) durch eine Bedienfront (BF) hindurchgeführt und von deren Frontseite (FS) aus betätigbar ist,
- wobei jedem Schutzschalter (LSₙ) ein ebenfalls von der Frontseite (FS) der Bedienfront (BF) aus zugängliches Koppelelement (KEₙ) zum Austausch von Diagnose- und/oder Parametrierdaten (D_{DP}) zugeordnet ist,
- **dadurch gekennzeichnet, dass** das Koppelement (KEₙ) für einen busfreien Datenaustausch mit dem Energieverteilungssystem (EN) schalterintern mit einem Leitungsanschluss (LOAD) der dem jeweiligen Schutzschalter (LSₙ) zugeordneten Systemkomponente (SKₙ) verbunden ist.

2. Schutzschalteranordnung nach Anspruch 1, wobei das Koppelelement (KEₙ) für einen bidirektionalen Datenaustausch ausgebildet ist.

3. Schutzschalteranordnung nach Anspruch 1 oder 2, wobei das Koppelelement (KEₙ) als Sende- und/ oder Empfangseinrichtung zum Datenaustausch ausgebildet ist.

4. Schutzschalteranordnung nach einem der Ansprüche 1 bis 3, wobei das Koppelelement (KEₙ) in der Bedienfront (BF) angeordnet ist.

5. Schutzschalteranordnung nach einem der Ansprüche 1 bis 4, wobei das Koppelelement (KEₙ) in der Nähe des oder im Bedienelement (BEₙ) des jeweiligen Schutzschalters (LSₙ) angeordnet ist.

6. Schutzschalteranordnung nach einem der Ansprüche 1 bis 5, wobei dass Koppelement (KEₙ) mit einer schalterinternen Verarbeitungseinheit (VE) des Schutzschalters (LSₙ) zum Messen und/oder Steuern von schalterrelevanten Daten bzw. Schalterelementen (SH, HS, HE) verbunden ist.

7. Schutzschalteranordnung nach einem der Ansprüche 1 bis 6, wobei in die schalterinterne Verbindung (VLₙ) des Koppelementes (KEₙ) mit dem Leitungsanschluss (LOAD) ein Hilfsschaltelement (HE) geschaltet ist.

8. Schutzschalteranordnung nach Anspruch 7, wobei das Hilfsschaltelement (HE) derart mit einem Hauptschaltelement (HS) des Schutzschalters (LSₙ) gekoppelt ist, dass nur bei geöffnetem Hauptschaltelement (HS) ein Datenaustausch mit der jeweiligen Systemkomponente (SKₙ) erfolgt.

## Claims

1. Circuit breaker arrangement having a number of circuit breakers (LSₙ), which are each connected via lines (Lₙₘ) to a system component (SKₙ) of a power distribution system (EN) and each have a control button (BEₙ),
- wherein the control button (BEₙ) for the purpose of tripping the respective circuit breaker (LSₙ) is passed through a control panel (BF) and can be actuated from the front side (FS) of said control panel,
- wherein a coupling element (KEₙ), which is likewise accessible from the front side (FS) of the control panel (BF), for the interchange of diagnosis and/or parametrization data (D_{DP}) is associated with each circuit breaker (LSₙ),
- **characterized in that** the coupling element (KEₙ) for bus-free data interchange with the power distribution system (EN) is connected within the breaker to a line terminal (LOAD) of the system component (SKₙ) associated with the respective circuit breaker (LSₙ).

2. Circuit breaker arrangement according to Claim 1, wherein the coupling element (KEₙ) is designed for bidirectional data interchange.

3. Circuit breaker arrangement according to Claim 1 or 2, wherein the coupling element (KEₙ) is in the form of a transmission and/or reception device for data interchange.

4. Circuit breaker arrangement according to one of Claims 1 to 3, wherein the coupling element (KEₙ) is arranged in the control panel (BF).

5. Circuit breaker arrangement according to one of Claims 1 to 4, wherein the coupling element (KEₙ) is arranged in the vicinity of or in the control element (BEₙ) of the respective circuit breaker (LSₙ) .

6. Circuit breaker arrangement according to one of Claims 1 to 5, wherein the coupling element (KEₙ) is connected to a breaker-internal processing unit (VE) of the circuit breaker (LSₙ) for measuring and/or controlling breaker-relevant data or breaker elements (SH, HS, HE).

7. Circuit breaker arrangement according to one of Claims 1 to 6, wherein an auxiliary switching element (HE) is connected into the breaker-internal connection (VLₙ) between the coupling element (KEₙ) and the line terminal (LOAD).

8. Circuit breaker arrangement according to Claim 7, wherein the auxiliary switching element (HE) is coupled to a main switching element (HS) of the circuit breaker (LSₙ) such that data interchange with the respective system component (SKₙ) only takes place when the main switching element (HS) is open.

## Revendications

1. Ensemble de commutateurs de protection comportant une pluralité de commutateurs de protection (LSₙ), qui sont reliés à un composant de système (SKₙ) d'un système de distribution d'énergie (EN) respectivement par l'intermédiaire de lignes (Lₙₘ) et présentent un bouton de commande (BEₙ),
- dans lequel le bouton de commande (BEₙ) est enfoncé pour déclencher le commutateur de protection respectif (LSₙ) à travers une façade de commande (BF) et peut être actionné à partir du côté antérieur (FS) de celui-ci,
- dans lequel à chaque commutateur de protection (LSₙ) est associé un élément de couplage (KEₙ) accessible également à partir du côté antérieur (FS) de la façade de commande (BF) pour échanger des données de diagnostic et/ou de paramétrage (D_{DP}),
**caractérisé en ce que** l'élément de couplage (KEₙ) est relié à l'intérieur du commutateur à un raccord de ligne (LOAD) du composant de système (SKₙ) associé au commutateur de protection respectif (LSₙ) pour un échange de données sans bus avec le système de distribution d'énergie (EN).

2. Ensemble de commutateurs de protection selon la revendication 1, dans lequel l'élément de couplage (KEₙ) est formé pour un échange de données bidirectionnel.

3. Ensemble de commutateurs de protection selon la revendication 1 ou 2, dans lequel l'élément de couplage (KEₙ) est réalisé en tant que dispositif d'émission et/ou de réception pour l'échange de données.

4. Ensemble de commutateurs de protection selon l'une des revendications 1 à 3, dans lequel l'élément de couplage (KEₙ) est disposé dans la façade de commande (BF).

5. Ensemble de commutateurs de protection selon l'une des revendications 1 à 4, dans lequel l'élément de couplage (KEₙ) est disposé à proximité du ou dans l'élément de commande (BEₙ) du commutateur de protection respectif (LSₙ).

6. Ensemble de commutateurs de protection selon l'une des revendications 1 à 5, dans lequel l'élément de couplage (KEₙ) est relié à une unité de traitement (VE) à l'intérieur du commutateur du commutateur de protection (LSₙ) pour mesurer et/ou commander les données associées au commutateur ou les éléments de commutation (SH, HS, HE).

7. Ensemble de commutateurs de protection selon l'une des revendications 1 à 6, dans lequel un élément de commutateur auxiliaire (HE) est monté dans la connexion à l'intérieur du commutateur (VLₙ) de l'élément de couplage (KEₙ) avec le raccord de ligne (LOAD).

8. Ensemble de commutateurs de protection selon la revendication 7, dans lequel l'élément commutateur auxiliaire (HE) est couplé à un élément de commutateur principal (HS) du commutateur de protection (LSₙ) de sorte qu'un échange de données avec le composant de système respectif (SKₙ) se produit uniquement avec un élément commutateur principal (HS) ouvert.
